# FASCICULE DE BREVET EUROPEEN

(11) **EP 1 567 378 B1**
(45) Date de publication et mention de la délivrance du brevet: **14.07.2010**
(21) Numéro de dépôt: 03809365.4
(22) Date de dépôt: 17.10.2003
(51) Int. Cl.: B60J 7/14, B60J 7/02, B60J 7/19

(54) **TOIT ESCAMOTABLE POUR VEHICULE ET VEHICULE ASSOCIE**
ABLEGBARES FAHRZEUGDACH UND DAZUGEHÖRIGES FAHRZEUG
CONVERTIBLE ROOF FOR VEHICLE AND ASSOCIATED VEHICLE

(30) Priorité: 18.10.2002 FR 0213002; 30.10.2002 FR 0213594; 16.07.2003 FR 0308694
(43) Date de publication de la demande: 31.08.2005
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2003/003077
(87) Numéro de publication internationale: WO 2004/037588

(56) Documents cités:
- EP-A- 1 031 448
- DE-C- 4 435 222
- FR-A- 2 816 248
- US-A- 5 975 620
- US-B1- 6 412 860
- PATENT ABSTRACTS OF JAPAN vol. 013, no. 257 (M-837), 14 juin 1989 (1989-06-14) -& JP 01 060420 A (FUJI HEAVY IND LTD), 7 mars 1989 (1989-03-07)
- PATENT ABSTRACTS OF JAPAN vol. 013, no. 033 (M-789), 25 janvier 1989 (1989-01-25) -& JP 63 242720 A (FUJI HEAVY IND LTD), 7 octobre 1988 (1988-10-07)

## Description

Est notamment ici concerné un toit escamotable pour véhicule, ainsi qu'un véhicule comprenant un tel toit.

Un toit escamotable permet notamment de transformer un véhicule du type coupé ou berline en un véhicule du type cabriolet.

FR-A- 2 816 248 divulgue un toit escamotable comprenant plusieurs éléments de toit.

Le déplacement de l'élément arrière vers le coffre est commandé par une glissière s'étendant à l'intérieur du coffre arrière dans laquelle est engagé un doigt solidaire de la partie arrière l'élément arrière d'autre part par un bras pivotant articulé en un point fixe de la carrosserie du véhicule et articulé audit élément arrière.

Les éléments avant, intermédiaire et arrière comprennent une zone centrale très plate, une tôle ou une vitre et, sur leurs côtés latéraux, deux zones massives dont la hauteur est importante par rapport à l'épaisseur de la zone centrale.

Les éléments avant, intermédiaire et arrière sont reliés les uns aux autres par des leviers articulés.

Lors de l'escamotage du toit dans le coffre, les différents éléments se superposent l'un au dessus due l'autre et l'ensemble est entraîné vers le coffre par l'oscillation et le coulissement de l'élément arrière vers le coffre.

On connaît également du document DE 44 35 222 un toit escamotable comprenant au moins trois éléments de toit avant, intermédiaire et arrière, ainsi que deux bras pivotants placés en position de recouvrement de part et d'autre et le long de l'élément avant.

En position de recouvrement, les deux bras s'étendent de l'avant de l'élément intermédiaire à l'arrière du pare-brise.

Les axes de pivotement sont situés sur l'avant de l'élément intermédiaire. En cours d'escamotage, les deux bras se replient dans le prolongement l'un de l'autre le long de l'élément intermédiaire.

Ce type de système présente l'inconvénient que l'empilement des toits une fois rangés dans le coffre arrière du véhicule occupe un volume important de par la hauteur des éléments de toit intermédiaire et avant dans le premier cas et de l'élément intermédiaire dans le second cas. Et la hauteur de l'empilement des éléments de toit est due à l'empilement des zones latérales des éléments de toit.

US-A- 5 975 620 divulgue par ailleurs un toit escamotable pour véhicule, selon le préambule de la revendication 1.

Un problème concerne l'encombrement longitudinal (axe X). Une solution est exprimée notamment en partie caractérisante de la revendication 1.

Ceci assure un gain de place en longitudinal et un mécanisme relativement simple.

Si seules les zones centrales des éléments de toit avant et intermédiaire sont superposées avec l'élément arrière, la hauteur de l'empilement est notablement réduite.

Les bras se trouvent repliés au niveau de l'avant de l'élément arrière. On peut obtenir un coffre dont le volume utile est plus important et d'un accès plus aisé.
Un autre avantage est une possibilité accrue pour le positionnement de l'élément arrière dans le coffre arrière et donc pour le choix des longueurs respectives des différents éléments.

Selon une autre caractéristique, il est ici proposé un toit escamotable dans lequel on réduit la hauteur de l'empilement des éléments de toit en s'affranchissant de la contrainte imposée par la hauteur des zones latérales.

Plus précisément, il est conseillé dans ce contexte que, si les bras précités (qui définissent donc, en position écartée de recouvrement, des traverses structurelles longitudinales entre lesquelles s'étend au moins l'élément -ou panneau rigide- de toit avant) sont prévus, ils soient montés pivotants sur l'élément arrière de toit entre la position de recouvrement où ils s'étendent entre l'extrémité avant de l'élément arrière et l'arrière du pare-brise, de part et d'autre et le long de l'élément de toit avant, et la position de rangement où ils se chevauchent transversalement par rapport au plan de symétrie du véhicule.

Dans un mode de réalisation particulier de l'invention, le toit comprend en outre un élément de toit intermédiaire, les bras s'étendant alors, en position de recouvrement, de part et d'autre et le long des éléments de toit avant et intermédiaire.

Dans un mode de réalisation particulier, le déplacement de l'élément arrière peut être commandé d'une part par une glissière s'étendant à l'intérieur du coffre arrière dans laquelle est engagé un doigt solidaire de la partie arrière l'élément arrière d'autre part par un bras pivotant articulé en un point fixe de la carrosserie du véhicule et articulé audit élément arrière.

L'élément avant peut être relié à l'élément intermédiaire par au moins deux leviers articulés audit élément avant et audit élément intermédiaire et l'élément intermédiaire peut être relié à l'élément arrière par au moins deux leviers articulés audit élément intermédiaire et audit élément arrière.

Selon un autre mode de réalisation, deux séries de glissières latérales superposées pour les éléments de toit avant et intermédiaire peuvent s'étendre le long des bras et le long des deux parties latérales intérieures de l'élément arrière en position de recouvrement. Chaque glissière peut comprendre deux sections de glissière, une première section de glissière étant placée sur l'un des bras, la deuxième section de glissière étant placée sur la partie latérale intérieure de l'élément arrière correspondant audit bras.

Les éléments de toit avant et intermédiaire peuvent chacun comprendre au moins deux doigts portés sur leurs côtés latéraux engagés de façon coulissante chacun dans une glissière latérale de façon à guider le mouvement de coulissement des éléments de toit avant et intermédiaire les uns sous les autres et sous l'élément arrière.

Un autre objet de l'invention est un véhicule automobile comprenant un toit escamotable tel que décrit précédemment.

Concernant un autre aspect innovant, qui peut être dissocié du précédent, on connaît par ailleurs de FR-A-2 820 692, des moyens de verrouillage des éléments de toit entre eux et avec le montant du pare-brise du véhicule.

De tels moyens de verrouillage sont en particulier adaptés à un toit escamotable comprenant des éléments de toits s'étendant sur toute la largeur du toit.

Dans le cas d'un toit escamotable comprenant des bras pivotants, en position de recouvrement, il est indispensable que les éléments de toit et les bras pivotants soient fixes les uns par rapport aux autres et par rapport au montant du pare-brise.

On se propose donc ici de fournir des moyens de verrouillage efficaces pour un toit escamotable comprenant des bras pivotants permettant de réduire la hauteur de l'empilement des éléments de toit en s'affranchissant de la contrainte imposée par la hauteur des zones latérales.

A cet effet, il est plus précisément proposé qu'un toit escamotable, du type déjà présenté, à bras pivotants, soit tel qu'il comprenne des moyens de motorisation, des premiers moyens de verrouillage des bras pivotants sur le montant du pare-brise du véhicule et des deuxièmes moyens de verrouillage d'au moins l'élément de toit avant sur les bras pivotants, les premiers et deuxièmes moyens de verrouillage et le pivotement des bras étant commandés par les mêmes moyens de motorisation tels qu'un moteur électrique.

Dans un mode de réalisation particulier, les premiers et deuxièmes moyens de verrouillage sont commandés par des tiges d'entraînement s'étendant à l'intérieur des bras entraînées en rotation par les moyens de motorisation.

Les premiers moyens de verrouillage de chaque bras sur le montant du pare-brise peuvent comprendre un crochet de verrouillage pivotant coopérant avec un organe de verrouillage complémentaire fixe solidaire du montant du pare-brise, le pivotement de chaque crochet de verrouillage pivotant pouvant être commandé par un écrou monté sur une partie filetée de l'une des tiges entraînées en rotation par les moyens de motorisation.

Les deuxièmes moyens de verrouillage peuvent avantageusement comprendre une saillie portée sur des moyens de vissage en prise avec une tige d'entraînement, ladite saillie étant mobile en translation sur les moyens de vissage et destinée à être positionnée à l'intérieur d'une cavité correspondant dans l'un des bras lorsque le toit est verrouillé.

Les moyens d'escamotage des éléments du toit peuvent comprendre une tige de pivotement filetée d'axe confondu avec l'axe de l'un des bras pivotants placée en prise avec la tige d'entraînement de sorte que la rotation de la tige de verrouillage entraîne la rotation de la tige de pivotement.

Dans un mode de réalisation, les bras peuvent pivoter selon des axes de rotation non parallèles.

Ainsi, seules les zones centrales des éléments de toit avant et intermédiaire sont superposés avec l'élément arrière, ce qui réduit notablement la hauteur de l'empilement. Les bras se trouvent repliés au niveau de l'avant de l'élément arrière. Un gain de volume important est alors réalisé et permet d'avoir un coffre dont le volume utile est plus important et d'un accès plus aisé. En outre, on donne ici plus de possibilités pour le positionnement de l'élément arrière dans le coffre arrière et donc pour le choix des longueurs respectives des différents éléments.

Dans un mode de réalisation particulier, le déplacement de l'élément arrière peut être commandé d'une part par une glissière s'étendant à l'intérieur du coffre arrière dans laquelle est engagé un doigt solidaire de la partie arrière l'élément arrière d'autre part par un bras pivotant articulé en un point fixe de la carrosserie du véhicule et articulé audit élément arrière.

L'élément avant peut être relié à l'élément intermédiaire par au moins deux leviers articulés audit élément avant et audit élément intermédiaire et l'élément intermédiaire peut être relié à l'élément arrière par au moins deux leviers articulés audit élément intermédiaire et audit élément arrière.

Selon un autre mode de réalisation, deux séries de glissières latérales superposées pour les éléments de toit avant et intermédiaire peuvent s'étendre le long des bras et le long des deux parties latérales intérieures de l'élément arrière en position de recouvrement. Chaque glissière peut comprendre deux sections de glissière, une première section de glissière étant placée sur l'un des bras, la deuxième section de glissière étant placée sur la partie latérale intérieure de l'élément arrière correspondant audit bras.

Les éléments de toit avant et intermédiaire peuvent chacun comprendre au moins deux doigts portés sur leurs côtés latéraux engagés de façon coulissante chacun dans une glissière latérale de façon à guider le mouvement de coulissement des éléments de toit avant et intermédiaire les uns sous les autres et sous l'élément arrière.

Un véhicule automobile comprenant un tel toit est ici à nouveau visé.

En combinaison avec, ou indépendamment de ce qui précède, est également ici concerné un système de toit escamotable (aussi dénommé «rétractable») pour une structure fixe ou mobile notamment pour un véhicule automobile.

Or, on connaît d'après FR-A-2 798 327 un système de toit rétractable pour véhicule constitué d'au moins deux panneaux de toit rigides, respectivement un premier élément de toit avant et un second élément de toit central(ou intermédiaire) solidarisés l'un à l'autre par des moyens coulissants agencés de manière telle que le panneau avant est mobile entre une position fermée dans laquelle il recouvre l'habitacle et une position ouverte dans laquelle il est, après coulissement vers l'arrière, superposé au panneau central. Ce système comporte deux glissières parallèles, chacune de forme arquée, fixées à la carrosserie (ou structure) du véhicule et s'étendent chacune entre de préférence un point proche de l'avant du panneau central et un point proche du fond du coffre arrière du véhicule et donc de l'extrémité du véhicule, le panneau central comportant des organes coopérants avec les glissières pour guider son déplacement le long de celles-ci.

Un problème que l'on vise à résoudre dans ce contexte est de remédier aux inconvénients d'encombrement et de manoeuvrabilité du système précité, dans le but d'augmenter l'espace de rangement restant dans le coffre arrière, une fois le toit rangé, ceci si nécessaire en liaison, avec éventuellement une lunette arrière basculante (en particulier oscillo-coulissante) appartenant ou non auxdites parties mobiles de toit précitées.

Il est donc proposé un véhicule comprenant:
- des sièges situés vers l'arrière de l'habitacle, et un espace de rangement situé derrière ces sièges,
- une structure de véhicule définissant localement un pavillon qui présente une ouverture obturable et un toit rétractable, ce toit comprenant au moins deux parties (ou éléments) rigides et mobiles par rapport à ladite structure, respectivement une première partie avant et une seconde partie arrière,
- des premiers éléments de déplacement auxquels sont liés lesdites parties de toit pendant une partie au moins de leur mouvement, entre une position déployée, atteinte par déplacement vers l'avant et dans laquelle ces parties recouvrent l'habitacle, sensiblement alignées l'une derrière l'autre, et une position repliée atteinte par déplacement vers l'arrière du véhicule et dans laquelle lesdites parties sont décalées l'une par rapport à l'autre et escamotées derrière les sièges, certaines au moins de ces parties de toit étant alors disposées dans une première position de rangement,
- et des éléments additionnels de déplacement qu'engagent au moins celles desdites parties de toit disposées dans leur dite première position de rangement, pour déplacer si nécessaire ces parties de toit vers une seconde position de rangement différente de la première.

Ces éléments additionnels de déplacement peuvent notamment déplacer les parties de toit d'une première position de rangement (qui peut être sensiblement verticale) vers une seconde position de rangement (qui peut être sensiblement horizontale). Avantageusement, les éléments additionnels de déplacement seront montés mobiles par rapport à la structure du véhicule et par rapport aux premiers moyens de déplacement, les parties de toit disposées en première position de rangement se dégageant des premiers moyens de déplacement tout en engageant les moyens additionnels de déplacement pour être déplaçables de leur première position vers leur seconde position de rangement.

Un tel système de toit peut améliorer l'espace de rangement disponible à l'arrière dans le coffre.

Selon une caractéristique complémentaire préférée, les premiers éléments de déplacement comprendront deux ensembles de glissières parallèles de forme arquée, liés à la structure du véhicule, chaque ensemble s'étendant entre une zone située à l'avant de ladite seconde partie arrière, respectivement de part et d'autre de l'ouverture de réception des parties de toit, et une zone située dans ledit espace de rangement du toit en position repliée, derrière les sièges, lesdites parties de toit étant liées aux ensembles de glissières, pendant une partie au moins de leur mouvement, par des moyens de liaison coulissants agencés de telle manière que de lesdites première et deuxième parties de toit sont mobiles entre leurs dites positions déployée et repliée.

De préférence, chaque ensemble de glissières et les éléments additionnels de déplacement qui lui est lié définiront en outre avantageusement une première partie avant de glissière s'étendant entre un point situé à l'avant de ladite partie arrière de toit et un point proche du bord supérieur de l'arrière desdits sièges, et une seconde partie de glissière s'étendant entre sensiblement ledit bord supérieur de l'arrière desdits sièges et un point proche du fond du coffre arrière du véhicule, à proximité de l'arrière de ces sièges, en partie basse de l'espace de rangement du toit, chaque deuxième partie de glissière étant montée mobile par rapport à la structure du véhicule et à la première partie de glissière correspondante et étant liée aux dites parties de toit concernées, lorsqu'elles arrivent dans leur seconde position repliée et que ces parties sont alors engagées avec les deuxième parties de glissières et dégagées des premières parties de glissières, pour amener ces parties de toit dans leur dite position superposée sensiblement à l'horizontale.

Un tel système rétractable permet un guidage précis des parties de toit entre leur position de fermeture au-dessus de l'habitacle et leur position d'ouverture (rangée à l'arrière) dans laquelle les parties de toit peuvent être rangées dans une position sensiblement verticale ou une position sensiblement horizontale.

Selon une autre caractéristique, il est aussi prévu que :
- en position déployée des parties de toit, celles-ci sont interposées, l'une derrière l'autre entre, à l'avant, le pare-brise qui est fixe sur la structure du véhicule, et un élément arrière (qui peut être escamotable) comprenant la lunette arrière,
- et, en position rangée horizontalement, les panneaux avant et central sont de préférence soit disposés en partie supérieure de ladite zone de rangement du toit, soit en partie inférieure, dans un dégagement de fond de l'espace de rangement.

Selon un autre aspect, relatif à un procédé de rangement, on conseille par ailleurs, pour ranger le toit ouvrant derrière les sièges:
- a) partant d'un état fermé du toit dans lequel les deux parties de toit recouvrent l'habitacle, en étant sensiblement alignées l'une derrière l'autre, de déplacer ces parties de toit jusqu'à l'intérieur de l'espace de rangement, pour certaines au moins jusqu'à une première position de rangement,
- b) puis de déplacer à nouveau la (les) partie(s) de toit concernée(s) vers une seconde position différente de la première et située de préférence soit en partie supérieure soit en partie inférieure de la zone arrière de rangement de toit.

Encore un autre aspect innovant, à considérer en combinaison ou non avec ce qui précède, concerne un système de toit ouvrant pour un véhicule automobile pourvu d'une structure (ou châssis), le système de toit ouvrant comprenant au moins un panneau (ou élément) de toit avant et un panneau (ou élément) de toit arrière, lesdits panneaux de toit étant mobiles l'un par rapport à l'autre suivant une direction longitudinale (typiquement la direction longitudinale d'avance du véhicule) entre :
* une position affleurante dans laquelle les panneaux sont disposés sensiblement au même niveau l'un et l'autre, le panneau de toit avant étant alors situé devant le panneau de toit arrière, suivant ladite direction longitudinale,
* et une position décalée en hauteur dans laquelle les panneaux de toit sont disposés au moins partiellement l'un au-dessus de l'autre.

A partir d'un tel système connu, un but est ici de proposer un système de toit ouvrant fiable, relativement simple mécaniquement, d'un prix de revient compatible avec une production en série en liaison avec des constructeurs automobiles, et qui évite les problèmes déjà rencontrés de coordination dans les mouvements des panneaux assurant une cinématique performante et fiable.
C'est pour cela qu'il est ici proposé que le système ci-dessus soit notamment tel que:
- l'un parmi les panneaux de toit avant et arrière comprend un groupe de leviers avant et un groupe de leviers arrière montés articulés par rapport à ce panneau de toit, pour basculer entre :
   * une position basse dans laquelle le panneau concerné affleure sensiblement une partie environnante de la structure du véhicule,
   * et une position haute dans laquelle ledit panneau concerné est décalé en hauteur par rapport au niveau de sa position affleurante,
- l'un au moins parmi ledit panneau de toit comprenant les groupes de leviers et l'autre panneau pouvant, si nécessaire, comprendre des moyens d'entraînement pour entraîner les groupes de leviers et l'un des panneaux:
   * soit de l'avant vers l'arrière, sur une distance assurant le passage du panneau de toit concerné de sa position affleurante à sa position décalée en hauteur,
   * soit de l'arrière vers l'avant, sur ladite distance, mais en sens inverse, pour assurer un passage de ce même panneau de toit de sa position décalée vers sa position affleurante, et
- les groupes de leviers engagent, préférentiellement sous la commande éventuelle desdits moyens d'entraînement, des guides (typiquement des rainures ou glissières) s'étendant essentiellement sensiblement parallèlement à ladite direction longitudinale, ces guides étant adaptés pour :
   * lors du déplacement commandé de l'avant vers l'arrière des groupes de leviers, guider leur basculement de la position affleurante du panneau correspondant vers sa position décalée,
   * et, lors du déplacement commandé de l'arrière vers l'avant de ces mêmes groupes de leviers, guider leur basculement de la position décalée du panneau correspondant vers sa position affleurante.

Pour favoriser encore l'obtention des buts fixés juste ci-avant, avec une mécanique toute à la fois relativement simple, performante et fiable, une autre caractéristique conseille que les groupes de levier(s) comprennent, individuellement, un levier coudé comprenant une première branche articulée en rotation sur le panneau de toit correspondant et reliée fixement par un coude à une deuxième branche, laquelle engage l'un desdits guides, pour son entraînement guidé.

Toujours dans le même but, et en tirant parti de l'utilisation déjà connue de moyens de coulissement de type "glissières", une autre caractéristique prévoit que les guides des leviers équipant le(s) panneau(x) de toit concerné(s) comprennent avantageusement des glissières dans lesquelles coulissent ces groupes de levier(s), les glissières présentant localement des déviations s'étendant obliquement par rapport à l'horizontale et par rapport à ladite direction longitudinale, sur une longueur suffisante_pour recevoir, individuellement, une partie d'un desdits groupes de levier, de telle sorte qu'une fois engagés dans ces déviations, les groupes de leviers concernés passent, en pivotant, de l'une de leurs positions haute ou basse vers l'autre.

Un autre problème ici pris en compte concerne la manière de faire se déplacer entre ces positions haute et basse chaque élément et panneau de toit concerné, en tenant compte de la position des panneaux de toit adjacent et de la structure adjacente du véhicule ( vis à vis de laquelle on peut typiquement souhaité qu'en position fermée des panneaux de toit, ceux-ci viennent sensiblement affleurer la structure environnante de caisse, notamment au niveau du pare-brise).

Dans ce but et éventuellement en combinaison avec ce qui précède, une autre caractéristique innovante prévoit qu'avantageusement la (chaque) glissière (ou rainure) dans laquelle coulisse le panneau (ou élément) de toit concerné présente, sur sa longueur, suivant la direction longitudinale du véhicule, au moins une première inclinaison avant dirigée vers le bas et une seconde inclinaison arrière également dirigée vers le bas, ces inclinaisons avant et arrière étant écartées longitudinalement d'une distance correspondant à l'écartement longitudinal entre les (dits groupes de) leviers avant et arrière du panneau de toit concerné, de manière que les (groupes de) leviers puissent soit s'y engager, en position basse de ce panneau de toit (typiquement position coulissée vers l'avant en direction du pare-brise), soit s'en dégager lors d'un coulissement vers l'arrière de ce panneau, l'accès par l'un des leviers arrière à la seconde inclinaison arrière correspondante étant conditionné par la position d'un levier basculant (ou bascule) placé dans la glissière et qui :
* dans une première position, interdit l'accès de la seconde inclinaison arrière et impose donc un coulissement du panneau de toit en position haute,
* et dans une seconde position inclinée, en travers de la glissière, autorise le levier arrière de l'élément de toit à pénétrer où sortir de la seconde inclinaison arrière. Par soucis de fiabilité, efficacité et limitation des coûts, il est par ailleurs conseillé que chaque levier basculant comprenne une portion de levier avant et une portion de levier arrière situées respectivement en avant et en arrière de son axe de pivotement, lequel est transversal à la direction d'allongement de la glissière, chaque levier basculant s'étendant, dans sa seconde position, parallèlement à la direction de la glissière, le long d'une zone inférieure de celle ci, en fermant ainsi directement l'accès à la seconde inclinaison arrière, par sa portion arrière.

Chaque levier (des groupes de leviers) avant et arrière précités étant engagé dans la glissière correspondante par l'intermédiaire d'un coulisseau avant et d'un coulisseau arrière appartenant à leur deuxième branche, la longueur de cette deuxième branche (distance entre les deux coulisseaux) sera de préférence sensiblement égale à la longueur de la déviation de la glissière où il s'engage, cette longueur étant en outre adaptée au mouvement des « bascules ».

Par ailleurs, la portion avant de chaque bascule s'étendra de préférence, et basculera, sous la glissière, devant la seconde inclinaison arrière, cette portion avant présentant alors un bord avant coudé vers le haut qui passe, lors d'un basculement, à travers une ouverture ménagée dans la glissière pour coopérer avec le coude avant du panneau de toit concerné.

A noter également que la portion arrière de chaque bascule présentera une surface inférieure définissant avantageusement une partie du contour de la dite seconde inclinaison arrière, dans la position inclinée de ce levier basculant.

Encore un autre aspect innovant ici traité concerne un procédé pour manoeuvrer les panneaux rigides du toit ouvrant, de façon à assurer un mouvement fluide, précis et dans des conditions de sécurité, fiabilité et efficacité importantes, ceci sur la base d'un mécanisme simple, performant et réalisable en série pour l'industrie automobile.

Dans ce contexte, le procédé proposé prévoit:
- que l'ouverture d'un des panneaux de toit par coulissement vers l'arrière dans les glissières provoque la sortie desdits (groupes de) leviers avant et arrière hors des déviations correspondantes alors que la bascule est dans sa seconde position inclinée, avec concomitamment un basculement vers le haut du dit panneau, en liaison avec l'articulation prévue des (groupes de) leviers,
- que la poursuite du coulissement vers l'arrière dudit panneau de toit provoque un basculement de la bascule vers sa première position, sous l'effet d'une poussée exercée sur lui par un levier (du groupe de leviers) avant,
- et que lors d'un coulissement en sens inverse, vers l'avant, du même panneau de toit, la bascule rebascule vers sa deuxième position inclinée sous l'effet d'une poussée, exercée par le levier avant concerné, sur son bord avant coudé vers le haut, ce basculement « retour » provoquant l'escamotage (hors de la glissière, de préférence) du bord coudé avant de ladite bascule et l'ouverture de l'accès à la seconde inclinaison arrière, permettant ainsi au levier concerné (du groupe de levier(s)) arrière de s'y engager lorsque le levier concerné (du groupe de levier(s)) avant arrivera dans la première inclinaison avant de la glissière.

D'autres particularités et avantages innovants apparaîtront encore dans la description ci-après et dans les dessins annexés, donnés à titre d'exemple non limitatifs, où:
La figure 1 est une vue de dessus d'un véhicule comprenant un toit escamotable innovant;
La figure 2 est une vue de côté des éléments de toit avant, arrière et intermédiaires en cours d'escamotage ;

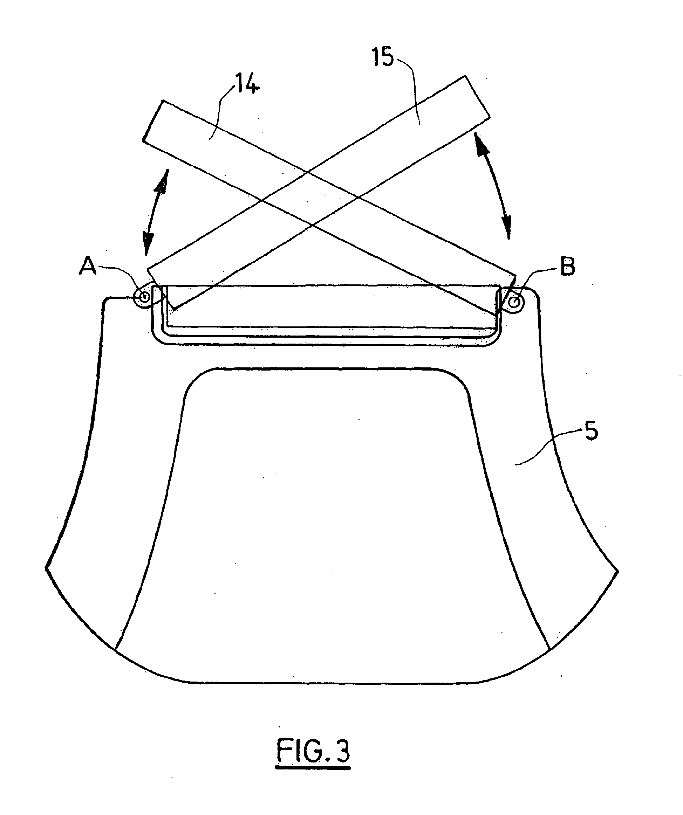

La figure 3 est une vue de dessus illustrant le pivotement des bras par rapport à l'élément de toit arrière ;
La figure 4 est une vue en coupe longitudinale schématique des éléments de toit de la figure 1 en position de rangement dans le coffre ;
La figure 5 est une vue en perspective de tous éléments de toit en cours d'escamotage ;
La figure 6 est une vue analogue à celle de la figure 4 comprenant en outre les deux bras ;
La figure 7 est une vue de face correspondant à la figure 6 ;
La figure 8 est une vue en perspective du toit illustrant des moyens de verrouillage;
La figure 9 est une vue schématique de côté des premiers moyens de verrouillage d'un bras sur le montant du pare-brise du véhicule ;
La figure 10 est une vue schématique de dessus des deuxièmes moyens de verrouillage d'un bras sur un élément de toit ;
La figure 11 est une vue schématique du contact entre la partie filetée d'une tige de verrouillage et d'un axe de pivotement d'un bras ;
La figure 12 est similaire à la figure 4 mais illustre une autre disposition de rangement des éléments de toit dans le coffre arrière ;
La figure 13 est une vue de côté des éléments de toit et des bras selon un deuxième mode de réalisation ;
La figure 14 est une vue en coupe longitudinale schématique des éléments de toit en position de rangement dans le coffre selon le deuxième mode de réalisation ;
La figure 15 est une vue de côté d'une partie d'un véhicule muni d'un toit dans plusieurs configurations de stockage,
Les figures 16,17,18, illustrent la superposition des éléments de toit de la figure précédente selon un mode de réalisation, ainsi qu'un système de verrouillage.
La figure 19 est une vue agrandie des moyens de guidage selon les figures 16 à 18,
La figure 20 est une vue agrandie du moyen d'entraînement selon les figures 16 à 18, Lla figure 21 est une coupe transversale du système de glissière selon le plan XXII/XXII de la figure 15,
et les figures 22,23,24 illustrent la superpositions des éléments de toit des figures 15 et suivantes, selon un autre mode de réalisation.

Dans la description qui suit pour toute partie du véhicule on définit l'arrière par rapport à l'arrière du véhicule à savoir le coffre où se range le toit repliable ou escamotable 1, l'avant étant défini en conséquence.

Le véhicule décrit étant symétrique, on décrira indifféremment le côté gauche et le côté droit de toute partie du véhicule comme le côté latéral.

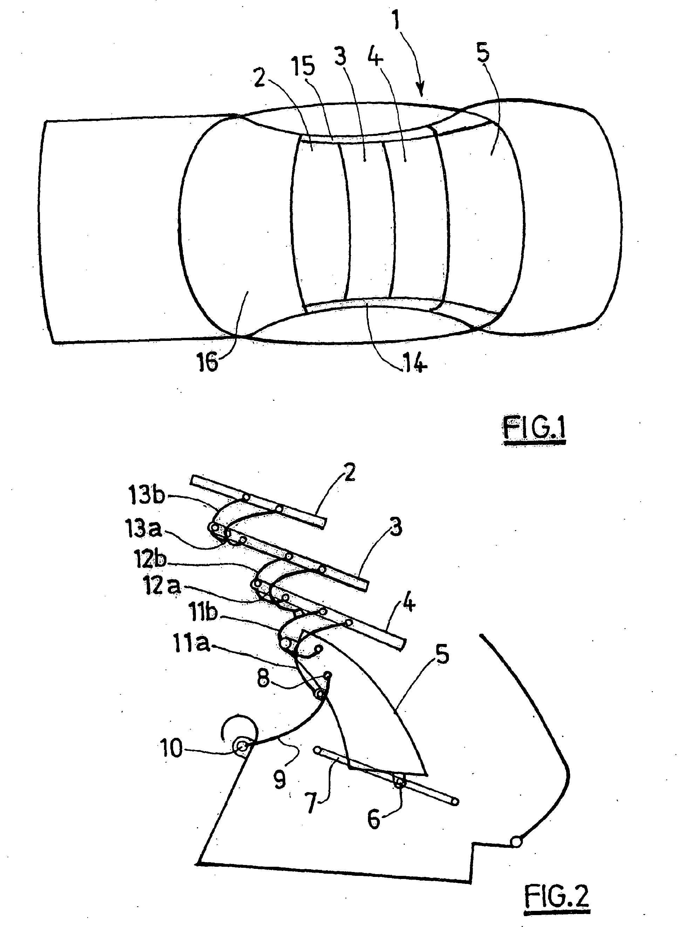

La figure 1 représente un véhicule comprenant un toit escamotable 1 comprenant quatre éléments de toit rigides : un élément de toit avant 2, deux éléments de toit intermédiaires 3, 4 et un élément de toit arrière 5 déplaçables entre une position de recouvrement dans laquelle ils recouvrent l'habitacle du véhicule et une position de rangement dans laquelle ils sont rangés à l'intérieur du coffre arrière du véhicule.

Selon d'autres modes de réalisation non représentés, le toit peut ne comprendre aucun élément intermédiaire, un seul, ou au contraire plus de deux éléments intermédiaires. Comme on le voit sur la figure 2, l'arrière de l'élément arrière 5 comprend un doigt 6 engagé dans une glissière 7 s'étendant à l'intérieur du coffre du véhicule.

En un point 8 de l'élément arrière est articulé une extrémité d'un bras-levier pivotant 9. L'autre extrémité du bras-levier 9 est articulé en un point fixe 10 à la carrosserie du véhicule. Le bras-levier 9 et la glissière 7 sont destinés à conduire le déplacement de l'élément arrière 5.

L'élément arrière 5 est également relié à l'élément intermédiaire 4 au moyen de deux paires de leviers. Sur chaque côté latéral, deux leviers 11a, 11b sont articulés d'une part à l'avant de l'élément arrière 5 et d'autre part à l'arrière de l'élément intermédiaire 4. L'élément intermédiaire 4 est en outre relié à l'élément intermédiaire 3 au moyen de deux paires de leviers. Sur chaque côté latéral, deux leviers 12a, 12b sont articulés d'une part à l'avant de l'élément intermédiaire 4 et d'autre part à l'arrière de l'élément intermédiaire 3.

Enfin, l'élément intermédiaire 3 est relié à l'élément avant 2 au moyen de deux paires de leviers. Sur chaque côté latéral, deux leviers 13a, 13b sont articulés d'une part à l'avant de l'élément intermédiaire 3 et d'autre part à l'arrière de l'élément avant 2.

De façon connue, le déplacement de l'élément arrière 5 vers le coffre arrière entraîne le déplacement de l'élément intermédiaire 4 sur l'élément arrière 5, le déplacement des éléments intermédiaire 3 et avant 2 respectivement sur les éléments intermédiaire 4 et intermédiaire 3.

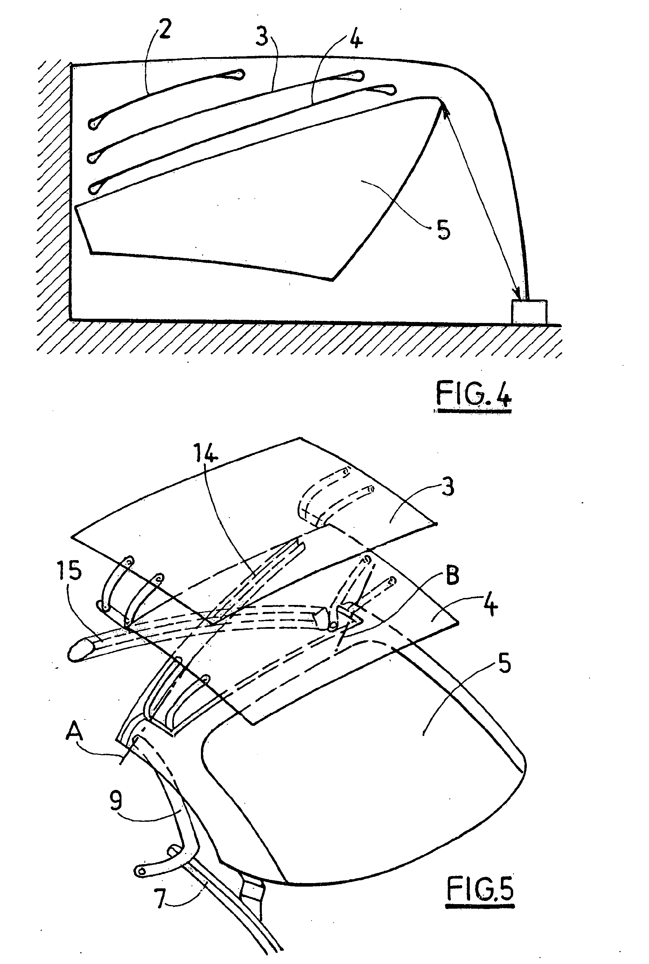

Ainsi, en position de rangement représentée à la figure 4, l'élément avant 2 est au dessus de l'élément intermédiaire 3, l'élément intermédiaire 3 est au dessus de l'élément intermédiaire 4, lui-même étant au dessus de l'élément arrière 5.

En référence à la figure 1, en position de recouvrement, deux bras pivotants 14, 15 s'étendent le long des côtés latéraux des éléments toits 2, 3, 4 entre l'avant de l'élément arrière 5 et l'arrière du pare brise 16 du véhicule.

Les bras 14, 15 sont montés pivotants chacun selon un axe de rotation A, B, situé sur l'avant de l'élément arrière 5. Les axes de rotations A, B sont non parallèles.

Lors de l'escamotage du toit, représenté sur la figure 5, les deux bras 14, 15 pivotent autour de leur axe de rotation A, B d'une position longitudinale (position de recouvrement du toit) à une position transversale (position de rangement du toit).

Les axes de rotations A, B étant non parallèles, le mouvement des bras 14, 15 se fait dans deux plans distincts de sorte que les bras 14, 15 peuvent se chevaucher.

Selon l'orientation et le placement des axes A, B sur l'élément arrière 5, les bras 14, 15 sont superposés l'un au dessus de l'autre, ou placés l'un devant l'autre ou autre.

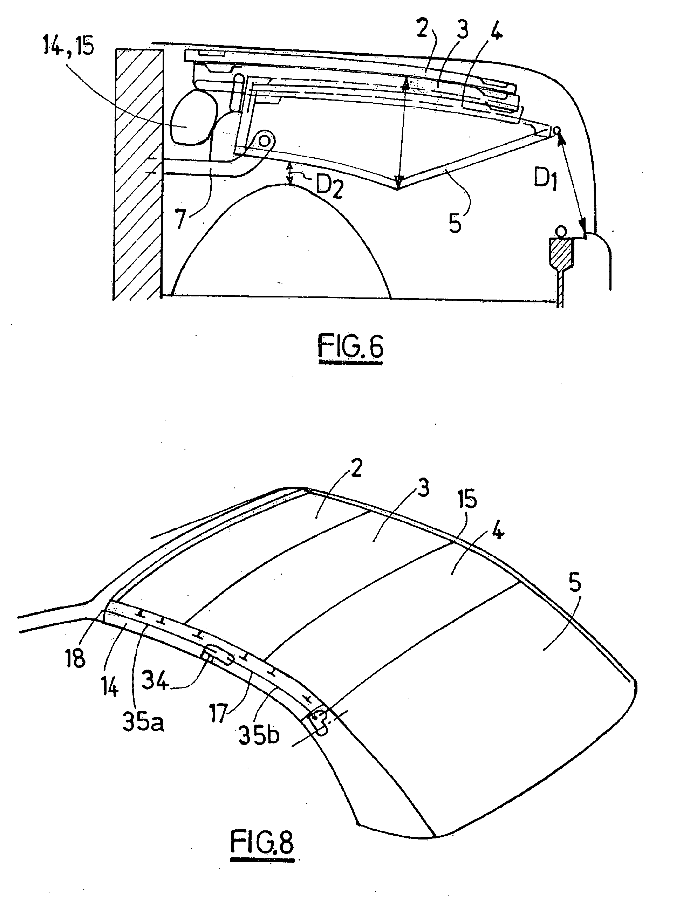

Dans la position de rangement, représentée sur la figure 6, les bras 14, 15 se chevauchent le long de l'avant des éléments de toit avant 2, intermédiaires 3, 4 et arrière 5. Le bras 14, 15 se situent dans la partie avant du coffre à l'opposé de la zone d'ouverture dudit coffre.

Ainsi, dans cette position, la hauteur au dessus de l'élément arrière 5 correspond à la hauteur de la superposition des éléments intermédiaires 3, 4 et avant 2.

La hauteur globale des éléments de toit 2-5 est moindre que dans le cas de toits escamotables sans bras pivotants 14, 15.

La distance D1 entre l'arrière de l'élément arrière 5 et le bas de la zone d'ouverture du coffre est donc plus importante.

De même, l'ensemble formé par les éléments de toit s'étendant moins bas vers le bas du coffre, le volume libéré permet d'obtenir un volume utile de coffre plus important.

Sur chaque côté du coffre, le passage des roues arrières du véhicules utilisent une partie du volume du coffre. Pour les véhicules à toit escamotable, le volume utilisé par ce passage de roue est une contrainte importante. Le toit permet ici de s'affranchir de ce problème et permet même de libérer une hauteur D2 entre le haut du passage de roue et l'ensemble formé par les éléments de toit dans le coffre.

Par ailleurs, la présence de bras 14, 15 indépendants des éléments de toit avant 2 et intermédiaires 3, 4 permet de déplacer uniquement l'élément de toit avant 2 ou les éléments de toit avant 2 et intermédiaire 3 ou encore des éléments de toit avant 2 et intermédiaires 3, 4 de façon à doter le véhicule d'un toit ouvrant.

En référence à la figure 8, en position de recouvrement, les éléments de toit avant 2 et intermédiaires 3, 4 sont verrouillés de part et d'autre aux bras 14, 15 par des moyens de verrouillage qui peuvent être constitués par les premiers et deuxième moyens de verrouillage illustrés.

Dans ce cas, chaque bras 14, 15 comprend un moteur 34 comprenant deux sorties d'arbre et situé sensiblement au milieu du bras. De chaque côté du moteur 34 s'étendent deux parties de tiges d'entraînement 35a, 35b jusqu'à chaque extrémité de bras 14, 15. Les parties de tige 35a, 35b sont asservies en rotation par le moteur 34.

La partie de tige 35a s'étend du moteur 34 jusqu'au pare-brise 16. La partie de tige 35b s'étend du moteur 34 jusqu'à l'axe de pivotement A, B du bras 14, 15.

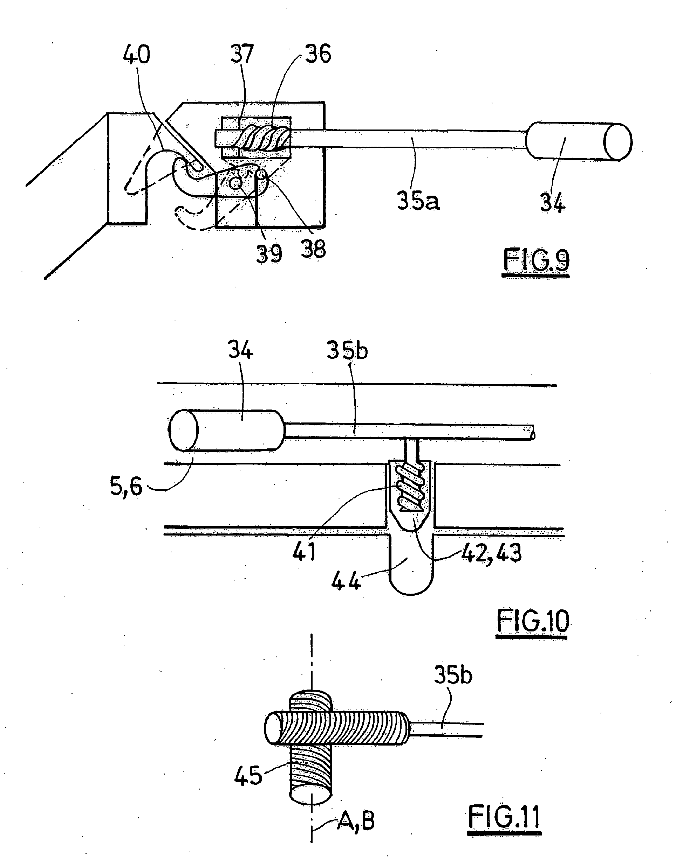

En référence à la figure 9, la partie de tige 35a comprend une partie filetée 36 sur laquelle est montée un écrou 37.

L'écrou 37 comporte un doigt 38 en prise dans une rainure 39 pratiquée dans la base d'un crochet pivotant 18. Le crochet pivotant 18 est apte à venir en prise avec une cavité de verrouillage 40 fixée au montant du pare-brise 16.

Le pivotement du crochet 18 est commandé par la translation de l'écrou 37, lui-même commandé par la rotation de la tige 35a.

En référence à la figure 8, les deuxièmes moyens de verrouillage permettent le verrouillage des éléments de toits 2-4 sur les bras 14, 15.

Les deuxièmes moyens de verrouillage comprennent une tige de vissage 41 située dans le bras 14, 15 sur laquelle est montée un écrou 42 portant une saillie 43 (fig.10). La rotation de la tige de vissage 41 entraîne la translation de la saillie 43 dans une cavité 44 placée dans l'un des éléments de toit 2-4.

La tige de vissage 41 est en prise avec la tige d'entraînement 35a, 35b de sorte que la rotation de la tige d'entraînement 35a, 35b entraîne la rotation de tige de vissage 41 et le verrouillage/déverrouillage de l'élément de toit 2-4 avec le bras 14,15.

En référence à la figure 11, la tige 35b est en prise avec une tige de pivotement 45 d'axe de pivotement A, B des bras 14, 15. La tige 35b et la tige 45 sont perpendiculaires l'un à l'autre. Les parties de la tige 35b et la tige 45 en contact sont filetées de manière à ce que la rotation de l'une entraîne la rotation de l'autre.

En conséquence le moteur 34 commande la rotation des parties de tige 35a, 35b lesquelles entraîne le crochet 18, la saillie 43 et les axes de pivotement de bras 14, 15. Ainsi le verrouillage des éléments de toit 2-4 sur les bras 14, 15, de l'élément de toit avant 2 sur le montant du pare-brise 16 et le pivotement des bras 14, 15 sont commandés par le même moteur 34.

Un tel agencement est également applicable à tout autre type de toit escamotable comprenant des bras pivotants et notamment au toit escamotable décrit dans le brevet DE 44 35 222 dans lequel les bras sont montés sur un élément intermédiaire du toit. Les bras 14, 15 pourraient également être verrouillés à l'arrière du pare-brise 16 selon des moyens de verrouillage connus, commandés par des tiges 17 et comprenant des doigts 18 de verrouillage à crochet coopérant avec des doigts fixes solidaires de l'arrière du pare-brise 16. Un tel agencement est décrit dans le document FR-A-2 820 692.

Des moyens moteurs communs pourraient par ailleurs être utilisés pour assurer l'entraînement des bras et provoquer le verrouillage et le déverrouillage du toit.

La présence de bras 14, 15 indépendants des éléments de toit avant 2 et intermédiaires 3, 4 permet de déplacer uniquement l'élément de toit avant 2 ou les éléments de toit avant 2 et intermédiaire 3 ou encore des éléments de toit avant 2 et intermédiaires 3, 4 de façon à doter le véhicule d'un toit ouvrant.

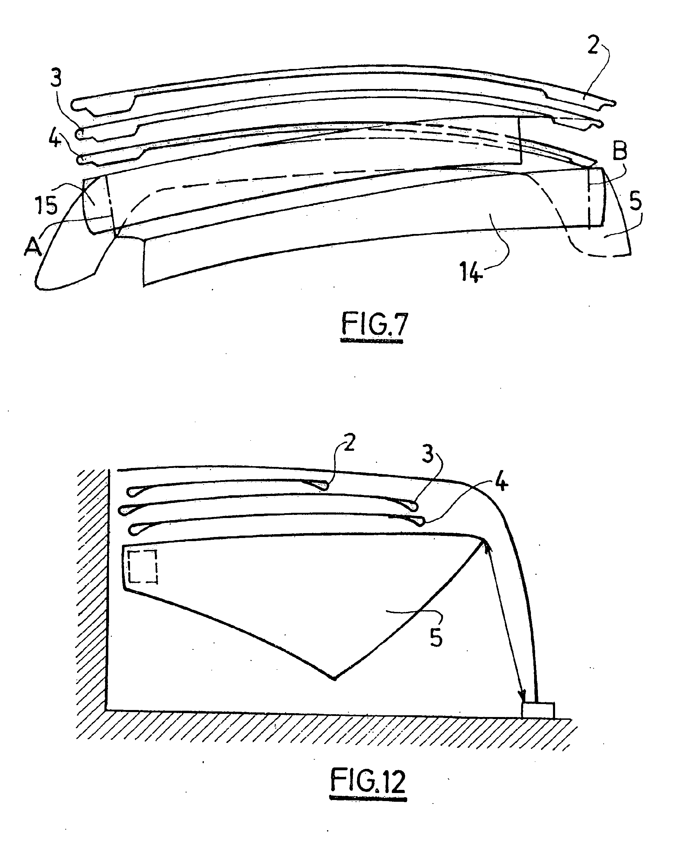

On voit sur la figure 12, en comparaison avec la figure 4, qu'on peut ici choisir l'inclinaison de l'élément arrière de toit, par exemple pour augmenter la hauteur d'ouverture du coffre. En fonction de cette inclinaison, les longueurs respectives des autres éléments peuvent varier dans une certaine mesure.

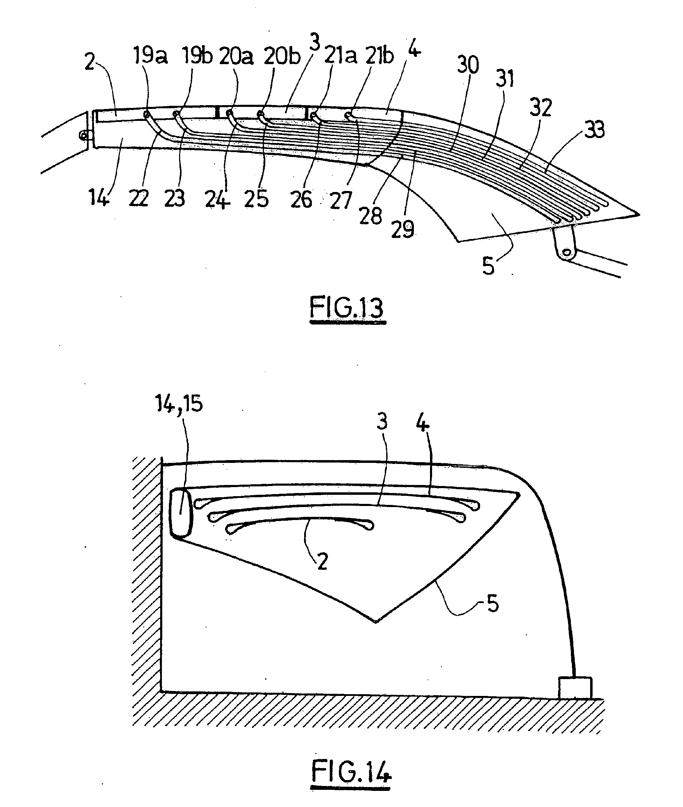

En référence aux figures 13-14 et selon un autre mode de réalisation d'escamotage des éléments de toits 2-5 dans le coffre arrière du véhicule, les éléments de toit avant 2 et intermédiaires 3, 4 sont pourvus sur chaque côté latéral de deux doigts 19a, 19b, 20a, 20b, 21 a, 21 b de coulissement.

Chaque bras 14, 15 est pourvu sur son côté intérieur en position de recouvrement de six sections 22-27 de glissières de coulissement destinées à guider les doigts de coulissement. Les six sections de glissière s'étendent à partir de l'extrémité du bras 14, 15 comprenant l'axe de rotation A, B.

Chaque section de glissière 22-27 s'étend jusqu'à un point du bras situé sur le haut du bras.

Chaque section de glissière 22-27 présente deux parties. La première partie de section de glissière s'étend sensiblement horizontalement à partir de l'extrémité du bras 14, 15 comprenant l'axe de rotation A, B. La seconde partie de longueur très inférieure à la longueur de la première partie remonte selon une pente importante par rapport à l'horizontale jusqu'au point du bras 14, 15.

Les sections de glissière 22-27 sont superposées, la plus longue présentant la deuxième partie de section la plus basse, la plus courte présentant la deuxième partie de section la plus haute.

En position de recouvrement, les sections de glissières 22-27 des bras 14, 15 se prolongent dans des sections de glissière 28-33 placées dans la partie intérieure de l'élément arrière 5 de façon à former six glissières dans lesquelles peuvent être guidés les doigts des éléments de toit avant 2 et arrière 5.

Dans un mode non représenté dans lequel le nombre d'éléments de toit est différent, le nombre de glissière est adapté au nombre d'éléments de toit.

Lors de l'escamotage du toit, l'élément de toit avant 2 grâce à ses doigts coulisse sous l'élément intermédiaire 3 qui coulisse sous l'élément intermédiaire 4 qui lui même coulisse dans l'élément arrière 5. Les mouvements de l'élément arrière 5 et des bras 14, 15 sont les mêmes que dans le mode de réalisation dans lesquels les éléments avant 2 et intermédiaires 3, 4 comprennent des leviers.

Comme dans le mode de réalisation précédent, dans la position rangée représentée sur la figure 8, un gain de place est réalisé puisque les éléments de toit avant 2 et intermédiaires 3, 4 prennent une place minimale dans l'élément de toit arrière 5.

Le toit ouvrant ainsi réalisé présente une grande variété de positions et l'on peut réaliser l'un ou plusieurs des éléments de toit à l'aide d'une vitre.

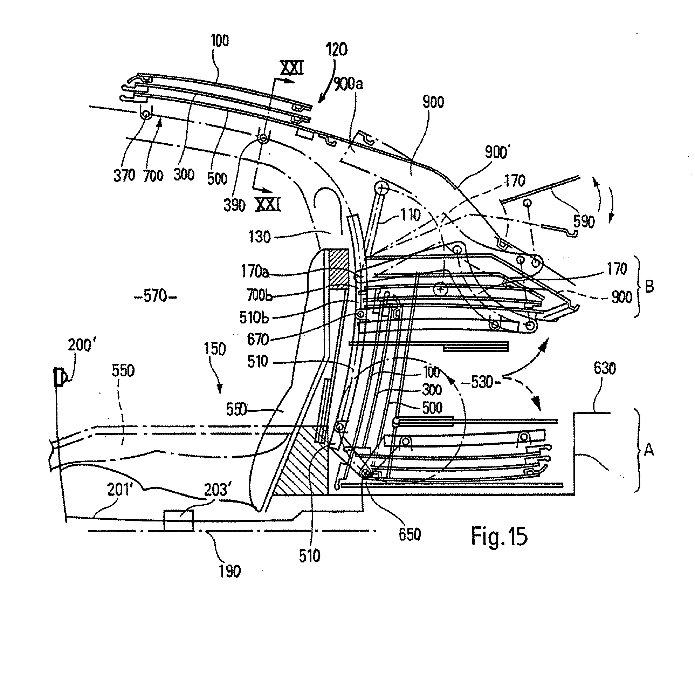

Si l'on s'intéresse maintenant aux figures 15 et suivantes, on remarque sur les figures 15 à 18 le toit ouvrant escamotable représenté comporte trois éléments (ou panneaux) de toit « centraux » 100,300,500 montés coulissants sur une glissière 700 et un élément (ou partie) de toit arrière (lunette) 900 monté oscillo-coulissant par un bras 110 relié au châssis 130 (appelé également « structure » du véhicule 150) et une glissière 170 montée pivotante sur ladite structure 130, suivant un axe 170a transversal à la direction longitudinale 190 d'avance du véhicule. La glissière 170 bascule ainsi avec le coffre 590 lorsqu'il s'articule par rapport à la structure du véhicule pour s'ouvrir (uniquement) de l'arrière vers l'avant( voir repère pointillés 170 sur la fig15).

Ci-après, on décrira comme éléments (ou panneaux) de toit centraux, les éléments de toit montés sur la glissière 700 et comme élément de toit arrière la lunette arrière 900 basculante (pourvue de la vitre de lunette 900').

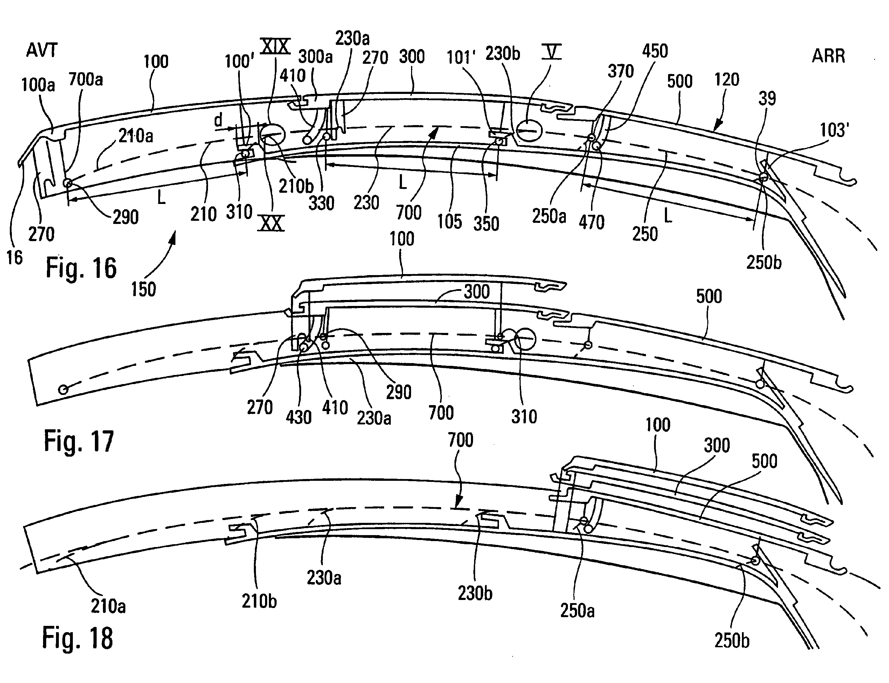

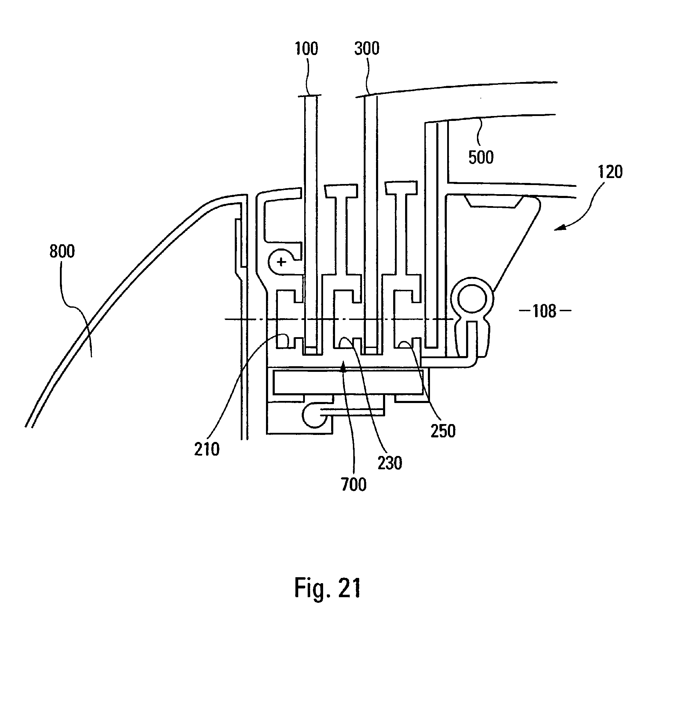

Comme illustré aux figures 16 et 21, l'élément de toit central avant 100 est monté coulissant sur une première rainure 210 de la glissière 700. Un deuxième élément de toit central intermédiaire 300 est monté coulissant sur une deuxième rainure 230 de cette glissière et un troisième élément de toit central arrière 500 est monté sur une troisième rainure 250 de la même glissière. Lorsqu'ils s'ouvrent vers l'arrière (ARR), les éléments de toit centraux viennent se superposer les uns sur les autres de telle manière que l'élément de toit central avant 100, vient se placer au-dessus de l'élément de toit central intermédiaire 300 qui se place lui-même sur l'élément 500 (fig15).

La glissière 700 est fixée à la structure 130, latéralement le long de barreaux fixes de toit 800 (fig21) s'étendant longitudinalement au moins le long des bords latéraux de l'ouverture 108 ménagée dans le pavillon du véhicule pour loger le toit ouvrant 120.

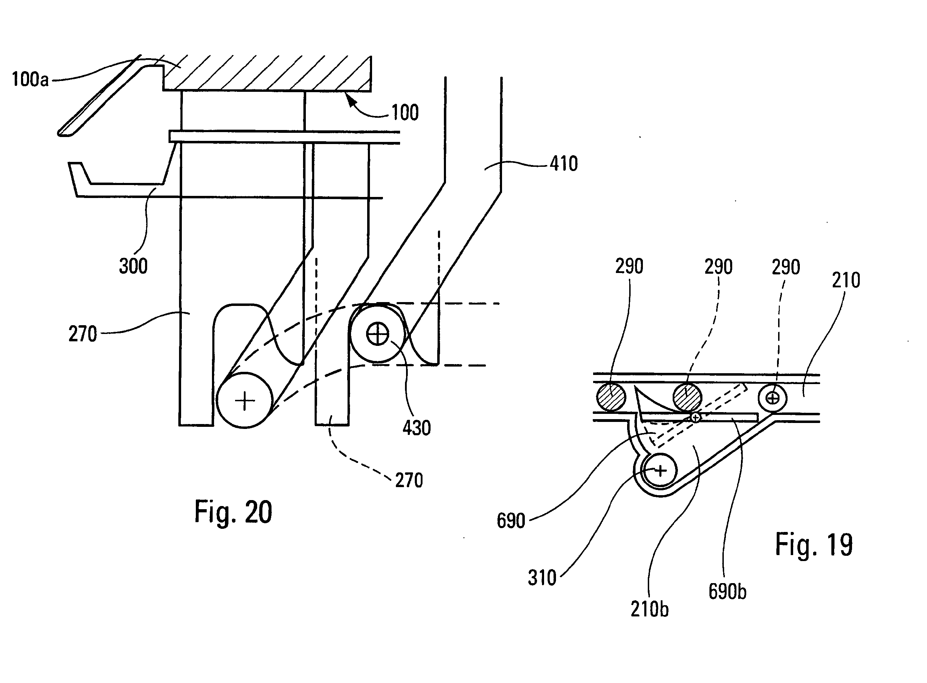

L'élément de toit central avant 100 est monté sur la première rainure 210 de la glissière 700. Sur le bord avant 100a de l'élément de toit central avant se situe un élément formant crochet 270 (fig20). L'élément de toit central avant est entraîné vers l'arrière par des moyens connus qui peuvent consister en des câbles flexibles motorisés. L'élément de toit central avant est engagé dans la première rainure 210 de la glissière par deux coulisseaux 290,310 espacés d'une distance axiale L. Le premier coulisseau 290 situé le plus en avant de l'élément de toit avant est engagé dans une déviation 210a (correspondant à une accentuation de la pente de la rainure 210) orientée vers l'avant du véhicule et vers le bas. Cette déviation se situe à l'extrémité avant de la première rainure 210 de la glissière. Le second coulisseau 310 situé le plus en arrière de l'élément de toit avant est également engagé dans une seconde déviation arrière 210b de même orientation que la première et distante de cette dernière de la même longueur L précitée. Lorsque le toit central avant est entraîné vers l'arrière, il est décalé vers le haut grâce à l'orientation de la première déviation (avant) 210a, ainsi qu'à l'orientation de la déviation arrière 210b. La courbure de la rainure 210 permet alors le passage de l'élément de toit 100 avant au-dessus de l'élément de toit 300.

Lorsque l'élément de toit 100 coulisse vers l'arrière, le coulisseau 290 se déplace dans la rainure 210 et, au niveau de la déviation 210b, ce coulisseau se déplace sur un levier basculant 690 alors en position inclinée vers le bas (pointillés fig19),jusqu'à faire basculer ce levier vers le haut de manière que sa partie arrière 690b obture l'extrémité supérieure de la déviation 210a, après que le coulisseau 310 en soit déjà sorti. On comprend que ce système de guidage sélectif à levier basculant se reproduit à l'endroit des autres déviations arrière 230b et 250b, de part et d'autre de l'ouverture du toit et en liaison avec les coulisseaux correspondants 350 et 390. En outre, lors du déploiement des panneaux de toit vers leur position fermée au-dessus de l'habitacle, le cheminement inverse des coulisseaux avant de chaque panneau opère le basculement retour des leviers concernés, avant engagement des coulisseaux arrière associés dans les déviations correspondantes.

L'élément de toit central intermédiaire est monté sur la deuxième rainure 230 de la glissière 700 par deux coulisseaux 330,350 espacés d'une longueur L. Le premier coulisseau 330 situé le plus en avant de l'élément de toit 3 est engagé dans une déviation 230a orientée vers l'avant du véhicule et vers le bas. Cette déviation 230a se situe à l'extrémité avant de la dite deuxième rainure 230. Le second coulisseau 350 situé le plus en arrière de l'élément de toit intermédiaire est également engagé dans une seconde déviation 230b de même orientation que la première et distante de cette dernière de la même longueur L déjà citée. Lorsque le toit central intermédiaire est entraîné vers l'arrière par l'élément de toit central avant 100, il est décalé vers le haut grâce à l'orientation de la première déviation 230a, ainsi qu'à l'orientation de la deuxième déviation 230b. La courbure de la rainure correspondante 230 permet alors le passage de l'élément de toit central intermédiaire 300 au-dessus de l'élément de toit central arrière 500.

L'élément de toit 500 est monté sur une troisième rainure 250 de la glissière 700 par deux coulisseaux 370,390 espacés d'une longueur L. Le premier coulisseau 370 situé le plus en avant de l'élément de toit arrière est engagé dans une déviation 250a orientée vers l'avant du véhicule et vers le bas. Cette déviation se situe à l'extrémité avant de la dite troisième rainure 250 de la glissière. Le second coulisseau 390 situé le plus en arrière de l'élément de toit arrière est également engagé dans une seconde déviation 250b de même orientation que la première et distante de cette dernière de la même longueur L précitée. Lorsque le toit central arrière 500 est entraîné vers l'arrière par les éléments de toit centraux avant 100 et intermédiaire 300, il est décalé vers le haut grâce à l'orientation de la première déviation 250a, ainsi qu'à l'orientation de la dite deuxième déviation 250b, permettant de décaler l'élément de toit 500 vers le haut.

Le bord avant 300a de l'élément de toit central intermédiaire 300 comporte un bras 410 (fig20 également) s'étendant vers le bas et comportant ,à son extrémité basse, un doigt ou un galet 430. Lorsque l'élément de toit central avant arrive à l'horizontale au-dessus de l'élément de toit 300 (fig17), le crochet 270 situé sur le bord avant 100a de l'élément de toit central avant vient en appui sur ledit doigt. Le crochet entraîne alors vers l'arrière cet élément de toit 300 et le décale vers le haut le long des deux déviations 230a et 230b, pour permettre le passage de l'élément de toit central intermédiaire au-dessus de l'élément de toit central arrière 500, la courbure de la glissière 700 qui s'étend vers le haut assurant par ailleurs le passage de l'élément de toit 100 au-dessus de l'élément de toit 500.

Une fois les éléments de toit centraux 100,300,500 superposés sensiblement horizontalement les uns sur les autres (figs15 et 18) l'élément de toit arrière 900 est entraîné par le bras 110 vers l'arrière permettant ainsi de décaler vers le haut le bord avant 900a de cet élément de toit et d'autoriser ainsi le passage des éléments de toit centraux.

Le bord avant 500a de l'élément de toit central arrière 500 comporte un bras 450 (fig16) s'étendant vers le bas et comportant, à son extrémité basse, un doigt ou galet 470. Lorsque l'élément de toit central intermédiaire 300 arrive à l'horizontale au-dessus de l'élément de toit central arrière, le crochet 490 situé sur le bord avant 300a de l'élément de toit central intermédiaire vient en appui sur le dit doigt 470. Le crochet entraîne alors vers l'arrière l'élément de toit 500 et le décale vers le haut le long des deux déviations 250a et 250b, pour permettre le décalage vers le haut de l'élément de toit arrière 500. Les éléments de toit centraux vont alors être entraînés le long de la glissière 700 et le long de la glissière pivotante 510 dans une position sensiblement verticale dans le coffre ou l'espace de rangement 530 situé derrière les sièges 550 du véhicule les plus en arrière de l'habitacle 570. La glissière mobile 510 s'étend le long des dossiers de siège 550, dans cette première position de rangement vertical des éléments de toit 100,300,500. Une fois ces éléments de toit centraux rangés verticalement, l'élément de toit arrière 900 va basculer vers l'arrière depuis sa position haute au-dessus de l'arrière de l'habitacle vers sa position rangée dans l'espace 530, par l'intermédiaire du bras d'entraînement 110 guidé par la glissière 170 pour venir se positionner dans une position sensiblement horizontale (repère 900 en pointillés sur la fig15).

Les éléments de toit centraux 100,300,500 sont alors dans leur position sensiblement verticale sur la deuxième glissière 510 montée pivotante sur le châssis 130. Cette deuxième glissière permet ainsi de faire pivoter les éléments de toit centraux d'une première position de rangement (ici sensiblement verticale) à une seconde position de rangement (ici sensiblement horizontale) qui peut être située dans un dégagement de fond 610 du plancher 630 du coffre, en regard de l'espace de rangement 530 (position dite sensiblement horizontale basse correspondant au repère A sur la fig15). La deuxième glissière 510 est articulée dans ce cas à la structure 130 par un axe de rotation 650 transversal à l'axe 190 longitudinal du véhicule situé sur l'extrémité inférieure 510a de la dite deuxième glissière pivotante.

Il est également possible de faire pivoter les éléments de toit 100,300,500 rangés dans leur première position, vers une deuxième position de rangement différente, ici sensiblement horizontale sous la lunette arrière 9000alors elle-même en position de rangement sensiblement horizontale( dite alors position sensiblement horizontale haute correspondant au repère B de la fig 15). La deuxième glissière 510 est alors articulée au châssis 130 par un axe de rotation 670 transversal à l'axe longitudinal 130 situé sur l'extrémité supérieure 510b de la glissière pivotante 510.

Par un système de verrous non représentés, il serait également possible de faire pivoter les éléments de toit, rangés dans leur première position sensiblement verticale, dans l'une ou l'autre desdites secondes positions de rangement haute ou basse, en prévoyant sur la glissière 510 les deux axes de pivotement 650,670 et en agissant sélectivement sur l'un ou l'autre des verrous.

Des moyens sélectifs, tels qu'un interrupteur 200' lié à un câble 201' et à un moteur 203' lui-même relié à la partie de glissière 510 concernée, permettent de commander à volonté le mouvement des parties concernées de toit entre leurs positions de rangement verticale et horizontale.

Il est possible également de faire basculer le dossier de sièges arrière 550 vers l'avant dans une position sensiblement horizontale(voir repère 550 en pointillés sur la fig15), permettant ainsi d'augmenter encore le volume du coffre. On pourrait même envisager la solution d'un deuxième glissière telle que 510 solidaire du dossier de siège pivotant vers l'avant et positionnant ainsi les éléments de toit rangés dans une position sensiblement horizontale au-dessus du dossier de siège.

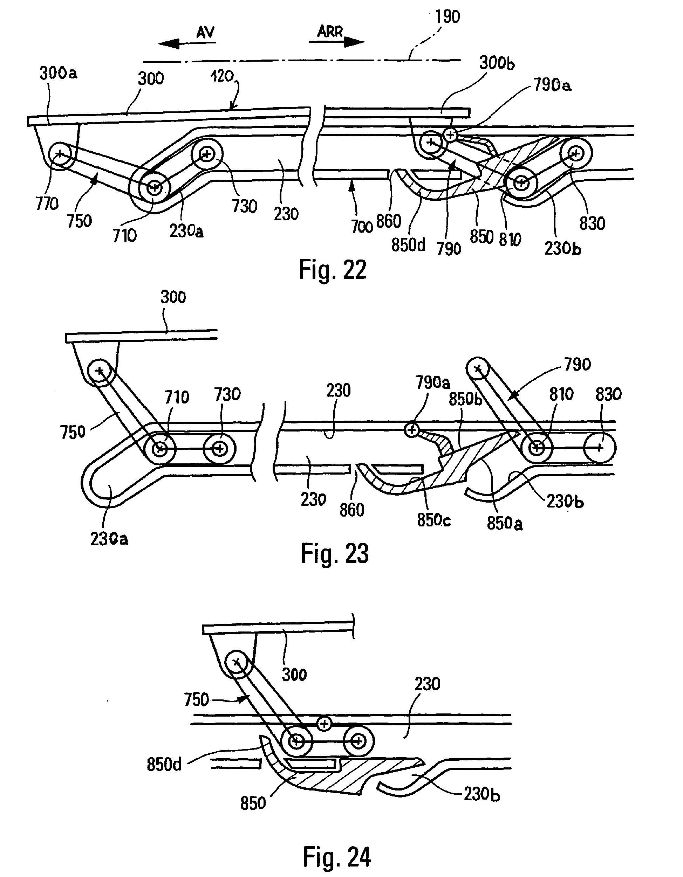

Dans le mode réalisation illustré aux figs22 à 24, l'élément de toit avant 100 vient se superposer sur l'élément de toit intermédiaire et les éléments de toit avant et intermédiaire viennent se superposer sur l'élément de toit arrière comme décrit en relation avec la fig15.

Le principe de soulèvement d'un toit pour permettre son déplacement au-dessus d'un autre dans un position superposée sera décrit en relation avec le soulèvement de l'élément de toit intermédiaire 300 passant au-dessus de l'élément de toit arrière 500.

L'élément de toit intermédiaire 300 est monté coulissant dans la deuxième rainure 230 de la glissière 700. Cet élément de toit intermédiaire est engagé dans cette rainure 230 par deux coulisseaux 710,730. Ces deux coulisseaux sont solidaires de l'élément de toit 300 par un bras coudé (ou levier) 750 appartenant à un groupe de leviers avant. Ce bras est articulé à l'élément de toit 300 par un axe 770 de rotation transversal à l'axe longitudinal 190.

Le premier bras coudé 750 est situé sur le bord avant 300a de l'élément de toit intermédiaire et un second bras coudé, articulé (ou levier) 790 est situé sur le bord arrière 300b de l'élément de toit intermédiaire 300. Pour le panneau 300, le bras articulé 790 appartient à un groupe de leviers arrière. Lorsque cet élément de toit est dans sa position fermée et basculée vers le bas pour être au même niveau que les éléments de toit avant 100 et arrière 500, les coulisseaux 710,730 du coude avant 750 sont engagés dans la déviation 230a. La partie avant de l'élément de toit intermédiaire 300 est dans alors sa position basse (fig22).

D'autres coulisseaux 810 et 830 liés au bras coudé 790 situé sur le bord arrière 300b de l'élément de toit 300 sont également engagés dans la deuxième déviation (arrière) 230b. Ainsi, lorsque que les coulisseaux 810,830 sont engagés dans la déviation 230b, la partie arrière de l'élément de toit intermédiaire est toujours dans sa position basse.

Un élément pivotant, ou levier basculant, 850 permet toutefois de guider le passage des coulisseaux 710,730 au-dessus de la déviation 230b, tant dans le sens d'ouverture que de fermeture de l'élément de toit intermédiaire. Ce même élément pivotant permet en outre de guider le passage des coulisseaux 810, dans la même déviation 230b. Le moyen pivotant 850 est articulé autour d'un axe 790a transversal à l'axe longitudinal du véhicule qui se situe sur le bord supérieur 230' de la rainure 230. La bascule 850 comporte trois surfaces de guidage 850a,850b,850c. Une première surface 850a permet de guider les coulisseaux 810, 830 dans la déviation 230b. la surface 850b guide le passage des coulisseaux 710,730 au-dessus de cette même déviation 230b aussi bien lorsque l'élément de toit intermédiaire coulisse vers l'avant que vers l'arrière. Quant à la troisième surface 850c, elle permet, avec son bord avant coudé 850d passant à travers l'ouverture 860 de la glissière 230 et lorsque l'élément de toit intermédiaire coulisse vers l'avant, de faire basculer le levier 850 en travers de la glissière et de positionner la surface 850a dans sa position haute des figures 22 et 23, afin de permettre l'engagement des coulisseaux 810, 830 du coude arrière 790 dans la dite deuxième déviation 230b (fig22).

Lorsque les éléments de toit avant, intermédiaire et arrière sont dans leur position fermée, sensiblement alignés les uns derrière les autres, ils sont verrouillés par des moyens coulissants solidaires de la structure 130 du véhicule.

Dans l'exemple représenté, des crochets de verrouillage 100',101',103' viennent verrouiller au moins un coulisseau (310,350,390) de chaque élément de toit. Ces trois crochets sont entraînés ,de l'avant vers l'arrière ou inversement, pour permettre le verrouillage ou le déverrouillage des éléments de toit, par une tige 105 qui se déplace parallèlement à la glissière 700. Cette tige est elle-même entraînée par des moyens connus tels qu'un ou plusieurs câbles flexibles.

Le premier crochet 100 de longueur d situé le plus en avant de la tige vient verrouiller le deuxième coulisseau 310 le plus en arrière de l'élément de toit central avant ,qui est engagé dans la deuxième déviation 210b de la première rainure.

Le deuxième crochet 101 de longueur supérieure (2d par exemple) situé sensiblement au milieu de la tige 105 vient verrouiller le deuxième coulisseau 350 le plus en arrière de l'élément de toit central intermédiaire 500, qui est engagé dans la déviation 230b.

Le troisième crochet 103 de longueur par exemple 3d ,situé sensiblement en arrière des premier et deuxième crochets de la tige, vient verrouiller le deuxième coulisseau 390 le plus en arrière de l'élément de toit central arrière 500, qui est engagé dans la deuxième déviation 250b de la troisième rainure.

Lorsque que l'élément de toit central avant 100 coulisse sur l'arrière pour se superposer avec l'élément de toit 300, le premier crochet va déverrouiller le deuxième coulisseau de l'élément de toit central avant, en se déplaçant d'un longueur d vers l'arrière. Les éléments de toit centraux intermédiaire et arrière restent alors en position de verrouillage par rapport à la glissière par les deuxième et troisième crochets de verrouillage. Le raisonnement est le même lors de la superposition de deux puis des trois éléments de toit centraux, cette dernière étape permettant le rangement des éléments de toit dans le l'espace arrière de rangement.

Dans ce qui précède, un ou plusieurs éléments ou panneaux rigides de toit peuvent être concernés en plus de la lunette arrière (repéré pour mémoire 5 sur la figl et 900 sur la fig15) et il est bien clair que le mécanisme des figures 22 à 24 n'est pas réservé à un toit à bras pivotants comme sur les premières figures.

## Revendications

1. Toit escamotable pour véhicule, comprenant :
- un élément de toit avant (2) et un élément de toit arrière (5), ces éléments de toit avant et arrière (2-5) étant mobiles entre une position de recouvrement dans laquelle ils recouvrent un habitacle du véhicule et une position de rangement dans un coffre arrière du véhicule,
- deux bras (14, 15) montés pivotants sur l'élément arrière (5) de toit entre la position de recouvrement où ils s'étendent entre l'extrémité avant de l'élément de toit arrière (5) et l'arrière d'un pare-brise (16) du véhicule, de part et d'autre et le long de l'élément de toit avant (2), et la position de rangement où ils se chevauchent transversalement par rapport à un plan de symétrie dudit véhicule,
**caractérisé en ce que** les bras (14, 15) sont pivotants selon des axes de rotation (A, B) non parallèles.

2. Toit escamotable selon la revendication 1, **caractérisé en ce qu'**il comprend en outre au moins un élément de toit intermédiaire (3, 4), les bras (14, 15) s'étendant, en position de recouvrement, de part et d'autre et le long des éléments de toit avant (2) et intermédiaire (3, 4).

3. Toit escamotable selon la revendication 2, **caractérisé en ce que** les éléments de toit avant (2) et intermédiaire (3, 4) comprennent des premiers moyens de verrouillage desdits éléments de toit sur les bras.

4. Toit escamotable selon l'une des revendications 2 ou 3, **caractérisé en ce que** chaque bras (14, 15) comprend des deuxièmes moyens de verrouillage (17, 18) desdits bras vis-à-vis du pare-brise (16).

5. Toit escamotable selon l'une des revendications précédentes, **caractérisé en ce que** le déplacement de l'élément de toit arrière (5) est commandé d'une part par une glissière (7) s'étendant à l'intérieur du coffre arrière et dans laquelle est engagé un doigt (6) solidaire de la partie arrière de l'élément de toit arrière (5) et d'autre part par un bras-levier (9) pivotant articulé en un point fixe (10) de la carrosserie du véhicule et audit élément de toit arrière (5).

6. Toit escamotable selon l'une des revendications 2 à 5, **caractérisé en ce que** l'élément de toit avant (2) est relié à l'élément de toit intermédiaire (3, 4) par au moins deux leviers (12a, 12b, 13a, 13b) articulés audit élément de toit avant (2) et audit élément de toit intermédiaire (3, 4) et **en ce que** l'élément de toit intermédiaire (3, 4) est relié à l'élément de toit arrière (5) par au moins deux leviers (11a, 11b) articulés audit élément de toit intermédiaire (3, 4) et audit élément de toit arrière (5).

7. Toit escamotable selon l'une des revendications 2 à 6, **caractérisé en ce que** deux séries de glissières latérales superposées pour les éléments de toit avant (2) et intermédiaire (3, 4) s'étendent le long des bras (14, 15) et le long de deux parties latérales intérieures de l'élément de toit arrière (5) en position de recouvrement.

8. Toit escamotable selon les revendications 2 et 3, **caractérisé en ce qu'**il comprend des moyens (34, 35) de motorisation des deuxièmes moyens de verrouillage des bras pivotants (14, 15) vis-à-vis du pare-brise du véhicule et des premiers moyens de verrouillage d'au moins l'élément de toit avant (2) sur les bras pivotants (14, 15), les premiers et deuxièmes moyens de verrouillage et le pivotement desdits bras pivotants (14, 15) étant commandés par les mêmes moyens de motorisation (34), tels qu'un moteur électrique.

9. Toit escamotable selon la revendication 8, **caractérisé en ce que** les premiers et deuxièmes moyens de verrouillage sont commandés par des tiges d'entraînement (35a, 35b) s'étendant à l'intérieur des bras pivotants (14, 15) et entraînées en rotation par les moyens de motorisation (34).

10. Toit escamotable selon l'une des revendications précédentes, **caractérisé en ce que** le déplacement de l'élément de toit arrière (5) est commandé d'une part par une glissière (7) s'étendant à l'intérieur du coffre arrière et dans laquelle est engagé un doigt (6) solidaire de la partie arrière de l'élément de toit arrière (5) et, d'autre part, par un bras-levier (9) pivotant articulé en un point fixe (10) de la carrosserie du véhicule et articulé audit élément de toit arrière (5).

11. Toit escamotable selon la revendications 1, **caractérisé en ce que**, ce toit comprend en outre au moins un élément de toit intermédiaire (3, 4), l'élément de toit avant (2) est relié à cet élément de toit intermédiaire (3, 4) par au moins deux leviers (12a, 12b, 13a, 13b) articulés audit élément de toit avant (2) et audit élément de toit intermédiaire (3, 4) et l'élément de toit intermédiaire (3, 4) est relié à l'élément de toit arrière (5) par au moins deux leviers (11a, 11b) articulés audit élément de toit intermédiaire (3, 4) et à l'élément de toit arrière (5).

12. Toit escamotable selon l'une des revendications 1 ou 11, **caractérisé en ce que** ce toit comprend au moins un élément de toit intermédiaire (3, 4) et deux séries de glissières latérales superposées pour les éléments de toit avant (2) et intermédiaire (3, 4), ces glissières latérales s'étendant le long des bras (14, 15) et le long de deux parties latérales intérieures de l'élément de toit arrière (5) alors en position de recouvrement.

13. Véhicule automobile, **caractérisé en ce qu'**il comprend un toit escamotable selon l'une des revendications précédentes.

## Claims

1. Retractable roof for vehicle, comprising:
- a front roof component (2) and a rear roof component (5), these front and rear roof components (2-5) being movable between a covering position, in which they cover a passenger compartment of the vehicle, and a storage position in a rear luggage compartment of the vehicle,
- two arms (14, 15), which are mounted pivoting on the rear roof component (5) between the covering position, where they extend between the front end of the rear roof component (5) and the rear of a windscreen (16) of the vehicle, on one side and the other, and throughout the length of the front roof component (2), and the storage position, where they straddle transversely in relation to a plane of symmetry of said vehicle,
**characterized in that** the arms (14, 15) are pivoting according to non-parallel axes of rotation (A, B).

2. Retractable roof according to Claim 1, **characterized in that** it also comprises at least one intermediate roof component (3, 4), the arms (14, 15) extending in the covering position on one side and the other, and throughout the length, of the front (2) and intermediate (3, 4) roof components.

3. Retractable roof according to Claim 2, **characterized in that** the front (2) and intermediate (3, 4) roof components include the first means of locking said roof components onto the arms.

4. Retractable roof according to any one of Claims 2 or 3, **characterized in that** each arm (14, 15) includes second means (17, 18) for locking said arms with respect to the windscreen (16).

5. Retractable roof according to any one of the preceding claims, **characterized in that** the movement of the rear roof component (5) is controlled on the one hand by a guideway (7) which extends to the interior of the rear luggage compartment, and into which a catch (6), which is integral with the rear part of the rear roof component (5), is inserted, and on the other hand by a pivoting lever arm (9) which is articulated with a fixed point (10) of the body of the vehicle and with said rear roof component (5).

6. Retractable roof according to any one of Claims 2 to 5, **characterized in that** the front roof component (2) is linked to the intermediate roof component (3, 4) by at least two levers (12a, 12b, 13a, 13b) which are articulated with said front roof component (2) and said intermediate roof component (3, 4), and **in that** the intermediate roof component (3, 4) is linked to the rear roof component (5) by at least two levers (11a, 11b) which are articulated with said intermediate roof component (3, 4) and said rear roof component (5).

7. Retractable roof according to any one of Claims 2 to 6, **characterized in that** two series of superimposed lateral guideways for the front (2) and intermediate (3, 4) roof components extend throughout the length of the arms (14, 15) and of two internal lateral parts of the rear roof component (5) in the covering position.

8. Retractable roof according to Claims 2 and 3, **characterized in that** it includes means (34, 35) for motorising the second means (17, 18) for locking the pivoting arms (14, 15) with respect to the windscreen of the vehicle, and the first means for locking at least the front roof component (2) onto the pivoting arms (14, 15), the first and second locking means and the pivoting of said pivoting arms (14, 15) being controlled by the same motorising means (34), such as an electric motor.

9. Retractable roof according to Claim 8, **characterized in that** the first and second locking means are controlled by driving rods (35a, 35b) which extend within the pivoting arms (14, 15) and are driven to rotate by the motorising means (34).

10. Retractable roof according to any one of the preceding claims, **characterized in that** the movement of the rear roof component (5) is controlled on the one hand by a guideway (7) which extends to the interior of the rear luggage compartment, and into which a catch (6), which is integral with the rear part of the rear roof component (5), is inserted, and on the other hand by a pivoting lever arm (9) which is articulated with a fixed point (10) of the body of the vehicle and with said rear roof component (5).

11. Retractable roof according to Claim 1, **characterized in that** this roof also comprises at least one intermediate roof component (3, 4), the front roof component (2) is linked to this intermediate roof component (3, 4) by at least two levers (12a, 12b, 13a, 13b) which are articulated with said front roof component (2) and said intermediate roof component (3, 4), and the intermediate roof component (3, 4) is linked to the rear roof component (5) by at least two levers (11a, 11b) which are articulated with said intermediate roof component (3, 4) and rear roof component (5).

12. Retractable roof according to any one of Claims 1 or 11, **characterized in that** the roof includes at least one intermediate roof component (3, 4) and two series of superimposed lateral guideways for the front (2) and intermediate (3, 4) roof components, said lateral guideways extending throughout the length of the arms (14, 15) and of two internal lateral parts of the rear roof component (5), which is then in the covering position.

13. Motor vehicle, **characterized in that** it includes a retractable roof according to any one of the preceding claims.

## Patentansprüche

1. Versenkbares Dach für ein Fahrzeug, mit:
- einem vorderen Dachelement (2) und einem hinteren Dachelement (5), wobei das vordere und hintere Dachelement (2-5) zwischen einer Abdeckposition, in welcher sie eine Fahrgastzelle des Fahrzeugs abdecken, und einer Verstauposition in einem heckseitigen Kofferraum des Fahrzeugs beweglich sind,
- zwei Armen (14, 15), die an dem hinteren Dachelement (5) schwenkbar zwischen der Abdeckposition, in welcher sich diese zwischen dem vorderen Ende des hinteren Dachelements (5) und der Rückseite einer Windschutzscheibe (16) des Fahrzeugs, beidseitig und entlang des vorderen Dachelements (2), erstrecken und der Verstauposition, in welcher sich diese quer zu einer Symmetrieebene des Fahrzeugs überlagern, angeordnet sind,
**dadurch gekennzeichnet, dass** die Arme (14, 15) entlang nicht paralleler Rotationsachsen (A, B) schwenkbar sind.

2. Versenkbares Dach nach Anspruch 1, **dadurch gekennzeichnet, dass** dieses ferner wenigstens ein mittleres Dachelement (3, 4) umfasst, wobei sich die Arme (14, 15) in der Verstauposition beiderseits und entlang des vorderen (2) und mittleren (3, 4) Dachelements erstrecken.

3. Versenkbares Dach nach Anspruch 2, **dadurch gekennzeichnet, dass** das vordere (2) und mittlere (3, 4) Dachelement erste Mittel zur Verriegelung der Dachelemente an den Armen umfasst.

4. Versenkbares Dach nach einem der Ansprüche 2 oder 3, **dadurch gekennzeichnet, dass** jeder Arm (14, 15) zweite Mittel (17, 18) zur Verriegelung der Arme gegenüber der Windschutzscheibe (16) umfasst.

5. Versenkbares Dach nach einem der vorhergehenden Ansprüche, **dadurch gekennzeichnet, dass** die Verschiebung des hinteren Dachelements (5) einerseits durch eine Schiene (7) gesteuert wird, die sich in das Innere des heckseitigen Kofferraums erstreckt und in welche ein Finger (6) eingreift, der mit dem hinteren Bereich des hinteren Dachelements (5) fest verbunden ist, und andererseits durch einen schwenkbaren Armhebel (9), der an einem Fixpunkt (10) der Karosserie des Fahrzeugs und des hinteren Dachelements (5) angelenkt ist.

6. Versenkbares Dach nach einem der Ansprüche 2 bis 5, **dadurch gekennzeichnet, dass** das vordere Dachelement (2) mit dem mittleren Dachelement (3, 4) durch wenigstens zwei Hebel (12a, 12b, 13a, 13b) verbunden ist, die an das vordere Dachelement (2) und das mittlere Dachelement (3, 4) angelenkt sind, und dass das mittlere Dachelement (3, 4) mit dem hinteren Dachelement (5) durch wenigstens zwei Hebel (11a, 11b) verbunden ist, an dass das mittlere Dachelement (3, 4) und das hintere Dachelement (5) angelenkt sind.

7. Versenkbares Dach nach einem der Ansprüche 2 bis 6, **dadurch gekennzeichnet, dass** sich in der Abdeckposition zwei Reihen von übereinander angeordneten Querschienen für das vordere (2) und mittlere (3, 4) Dachelement entlang der Arme (14, 15) und entlang zwei unterer Querbereiche des hinteren Dachelements (5) erstrecken.

8. Versenkbares Dach nach den Ansprüchen 2 und 3, **dadurch gekennzeichnet, dass** dieses Mittel (34, 35) zur Motorisierung der zweiten Verriegelungsmittel der Schwenkarme (14, 15) gegenüber der Windschutzscheibe des Fahrzeugs und der ersten Verriegelungsmittel für wenigstens das vordere Dachelement (2) an den Schwenkarmen (14, 15) umfasst, wobei die ersten und zweiten Verriegelungsmittel und die Schwenkung der Schwenkarme (14, 15) durch ein und dasselbe Motorisierungsmittel (34) gesteuert werden, wie einem elektrischen Motor.

9. Versenkbares Dach nach Anspruch 8, **dadurch gekennzeichnet, dass** die ersten und zweiten Verriegelungsmittel durch Mitnehmerstangen (35a, 35b) gesteuert werden, die sich in das Innere der Schwenkarme (14, 15) erstrecken und durch die Motorisierungsmittel (34) in Drehung versetzt werden.

10. Versenkbares Dach nach einem der vorhergehenden Ansprüche, **dadurch gekennzeichnet, dass** die Verschiebung des hinteren Dachelements (5) einerseits durch eine Schiene (7) gesteuert wird, die sich in das Innere des heckseitigen Kofferraums erstreckt und in welcher ein Finger (6) eingreift, der fest mit dem hinteren Bereich des hinteren Dachelements (5) verbunden ist, und andererseits durch einen schwenkbaren Armhebel (9), der an einem Fixpunkt (10) der Karosserie des Fahrzeugs angelenkt ist und an dem hinteren Dachelement (5) angelenkt ist.

11. Versenkbares Dach nach Anspruch 1, **dadurch gekennzeichnet, dass** das Dach ferner wenigstens ein mittleres Dachelement (3, 4) umfasst, wobei das vordere Dachelement (2) mit diesem mittleren Dachelement (3, 4) durch wenigstens zwei Hebel (12a, 12b, 13a, 13b) verbunden ist, die an das vordere Dachelement (2) und an das mittlere Dachelement (3, 4) angelenkt sind und das mittlere Dachelement (3, 4) mit dem hinteren Dachelement (5) durch wenigstens zwei Hebel (11a, 11b) verbunden ist, die an das mittlere Dachelement (3, 4) und das hintere Dachelement (5) angelenkt sind.

12. Versenkbares Dach nach einem der Ansprüche 1 bis 11, **dadurch gekennzeichnet, dass** dieses Dach wenigstens ein mittleres Dachelement (3, 4) und zwei Reihen von übereinander liegenden Querschienen für das vordere (2) und mittlere (3, 4) Dachelement umfasst, wobei sich diese Querschienen in einer Abdeckposition entlang der Arme (14, 15) und entlang der zwei unteren Querbereiche des hinteren Dachelements (5) erstrecken.

13. Kraftfahrzeug, **dadurch gekennzeichnet, dass** dieses ein versenkbares Dach nach einem der vorhergehenden Ansprüche umfasst.
